# EUROPÄISCHE PATENTSCHRIFT

(11) **EP 3 260 716 B1**
(45) Veröffentlichungstag und Bekanntmachung des Hinweises auf die Patenterteilung: **22.05.2019**
(21) Anmeldenummer: 17175707.3
(22) Anmeldetag: 13.06.2017
(51) Int. Cl.: F16C 17/03, F16C 35/02, F16C 27/02

(54) **KIPPSEGMENTLAGER**
TILT SEGMENT BEARING
PALIER À PATINS OSCILLANTS

(30) Priorität: 23.06.2016 DE 102016211236
(43) Veröffentlichungstag der Anmeldung: 27.12.2017
(73) Patentinhaber: Robert Bosch GmbH, 70442 Stuttgart (DE)
(72) Erfinder: Doehring, Jochen, 70439 Stuttgart-Stammheim (DE); Maier, Tim, 73207 Plochingen (DE)

(56) Entgegenhaltungen:
- CH-A- 558 481
- JP-A- H07 174 138
- US-A- 2 384 589
- US-A- 5 772 334
- US-A1- 2014 219 592

## Beschreibung

Die Erfindung betrifft ein Kippsegmentlager zur Lagerung einer Welle und insbesondere ein Luftlager als Kippsegmentlager.

### Stand der Technik

Kippsegmentlager sind aus der Art der Luftlager.

Aus der DE 10 2010 049 493 A1 ist ein ringförmiges Tragteil bekannt, welches eine Öffnung aufweist, in welchem Lagerelemente angeordnet sind. Die Lagerelemente sind als Kippsegmente ausgebildet. Dabei ist in der Öffnung des Tragteils ein Halteelement angeordnet, welches eine pilzförmige Ausgestaltung aufweist, so dass im Bereich des Halteelements eine oder mehrere Nasen angeordnet sind, welche Hinterschnitte bilden. Diese Hinterschnitte wirken mit einer in das Lagerelement eingebrachten Öffnung zusammen, welche ebenfalls in einer mit den Hinterschnitten des Halteelements korrespondierenden Art so ausgebildet ist, dass in montiertem Zustand die Hinterschnitte mit Abstand von geeigneten Teilen des Lagerelements hintergriffen werden. Das Lagerelement wird beim Einlegen in die Öffnung des Tragteils eingerastet und kann so gegen ein Herausfallen gesichert werden. JP 07 174 138 zeigt ein Kippsegmentlager wobei die Kippsegmente jeweils auf die Stirnseite eines Stiftelements schwenkbar angeordnet sind und die Stiftelemente zur Regelung eines Spalts radial verstellbar sind.

### Offenbarung der Erfindung

Die Erfindung offenbart ein Kippsegmentlager mit den Merkmalen des Patentanspruchs 1. Demgemäß ist ein Kippsegmentlager vorgesehen, aufweisend:
ein Kippsegment, welches ein Stiftelement aufweist,
eine Hülse, wobei die Hülse wenigstens eine Stiftelementaufnahme mit einer Aussparung in Umfangsrichtung aufweist, wobei das Stiftelement in der Aussparung aufnehmbar und entlang der Aussparung in Umfangsrichtung beweglich ist zum Einstellen wenigstens eines Spalts des Kippsegments.

### Vorteile der Erfindung

Mittels der Stiftelementaufnahme der Hülse kann das Kippsegment in eine vorbestimmte Position bewegt und dadurch sehr einfach justiert werden zum Einstellen wenigstens eines Spalts des Kippsegments, insbesondere eines Spalts zwischen der Innenseite der Hülse und der Außenseite des Kippsegments und/oder zwischen der Innenseite der Hülse und einer Außenseite einer durch das Kippsegmentlager zu lagernden Welle.

Bevorzugte Weiterbildungen sind Gegenstand der Unteransprüche.

In einer Ausführungsform der Erfindung weist das Stiftelement einen Schaft und einen Kopf auf, wobei der Schaft und der Kopf fest oder lösbar miteinander verbunden sind und/oder wobei der Schaft und das Kippsegment fest oder lösbar miteinander verbunden sind. Durch die lösbare Befestigung des Kopfes kann beispielsweise besonders leicht ein zusätzliches Federelement mit dem Kippsegment verbunden werden.

Der Kopf kann in einer weiteren Ausführungsform der Erfindung als Mutter mit einem Innengewinde und der Schaft mit einem zu dem Innengewinde der Mutter korrespondierenden Außengewinde ausgebildet sein. Dadurch kann das Kippsegment durch Drehen der Mutter in radialer Richtung bewegt und dadurch ein Spalt des Kippsegments, insbesondere ein Spalt zwischen Kippsegment und Hülse in montiertem Zustand eingestellt und justiert werden. Der Kopf des Stiftelements kann dabei außen auf der Hülse aufliegen. Des Weiteren erfordert die Stiftelementaufnahme zur Aufnahme des Stiftelements des Kippsegments weder eine Vertiefung mit einem Boden noch einen Steigungsbereich oder einen Boden mit einer Steigung.

In einer anderen Ausführungsform der Erfindung ist der wenigstens eine Spalt des Kippsegments durch Schrauben der Mutter entlang des Schafts einstellbar. Dadurch muss der Schaft des Kippsegments nicht mit einer vorbestimmten Schaftlänge, insbesondere in Abhängigkeit von der Steigung des Bodens, hergestellt werden zum Einstellen des wenigstens einen Spalts des Kippsegments.

Gemäß einer Ausführungsform der Erfindung weist die Stiftelementaufnahme eine Vertiefung mit einem Boden auf, wobei das Stiftelement in der Aussparung entlang des Bodens in Umfangsrichtung beweglich ist. Dadurch kann das Stiftelement mit dem Kopf in der Vertiefung insbesondere vollständig oder zumindest bündig aufgenommen werden, je nach Funktion und Einsatzzweck des Kippsegmentlagers und seiner Hülse.

Der Boden der Vertiefung ist mit einer Steigung ausgebildet zum Positionieren des Stiftelements und des mit dem Stiftelement verbundenen Kippsegments in einer vorbestimmten Position entlang des Steigungsbereichs des Bodens zum Einstellen des wenigstens einen Spalts des Kippsegments. Auf diese Weise kann auch ein Kippsegment einstückig mit dem Stiftelement und insbesondere dessen Schaft und Kopf ausgebildet werden. Die Länge des Schafts ist dabei auf die Steigung des Bodens abgestimmt zum Einstellen des wenigstens einen Spalts des Kippsegments.

Die Unterseite des Kopfs des Stiftelements ist in einer Ausführungsform der Erfindung derart ausgebildet, dass stets die Unterseite des Kopfes mit dem Boden und insbesondere einem vorhandenen Steigungsbereich des Bodens in Kontakt ist, wenn das Stiftelement mit seinem Kopf entlang des Bodens in der Aussparung in eine vorbestimmten Position bewegt wird zum Einstellen des wenigstens einen Spalts des Kippsegments. Die Unterseite des Kopfes kann beispielsweise gerade und/oder gewölbt, ausgebildet sein oder jede andere Form aufweisen, sofern ein Kontakt zwischen der Unterseite des Kopfes und dem Boden und insbesondere dessen Steigungsbereich sichergestellt werden kann, wenn das Stiftelement entlang des Bodens in Umfangsrichtung der Hülse bewegt wird.

In einer weiteren Ausführungsform der Erfindung kann das Stiftelement mit dem Kippsegment einstückig ausgebildet sein, z.B. als Gußteil, Pressteil oder aus dem vollen Material herausgearbeitetes Bauteil.

Die Hülse kann in einer anderen Ausführungsform der Erfindung eine Einführungsaussparung aufweisen, welche derart ausgebildet ist, dass das Stiftelement entlang der Einführungsaussparung beweglich ist, wobei die Einführungsaussparung sich von einem Ende der Hülse zu der Stiftelementaufnahme erstreckt und mit dieser derart verbunden ist, dass das Stiftelement von der Einführungsaussparung in die Stiftelementaufnahme bewegbar ist. Die Stiftelementaufnahme kann sich dabei zu einer oder beiden Seiten der Einführungsaussparung in Umfangsrichtung der Hülse erstrecken. Der Boden der Vertiefung der Stiftelementaufnahme kann sich in einer Ausführungsform der Erfindung zu einem oder beiden Enden der Hülse erstrecken. Dadurch kann die Position des Stiftelements und Kippsegments leicht eingesehen und justiert werden.

Das Stiftelement in der Stiftelementaufnahme ist in einer weiteren Ausführungsform der Erfindung in einer vorbestimmten Position, in welcher der wenigstens eine Spalt des Kippsegments z.B. eingestellt ist, zumindest blockierbar und/oder fixierbar. Auf diese Weise kann verhindert werden, dass das Kippsegment sich aus seiner eingestellten Position und damit der wenigstens eine eingestellte Spalt des Kippsegments ungewollt verändert.

Wenigstens eines der Stiftelemente eines der Kippsegmente des Kippsegmentlagers ist in einer Ausführungsform der Erfindung lediglich derart blockiert, dass es weiterhin in Umfangsrichtung beweglich ist, so dass ein Kippen des mit dem Stiftelement verbundenen Kippsegments beispielsweise zumindest im zweistelligen µm Bereich möglich bleibt. Wenigstens eines der Kippsegmente des Kippsegmentlagers darf daher, wie z.B. bei einem Keil, blockiert aber nicht in der Bewegung gänzlich behindert werden. Die radiale Bewegung darf bei einem Teil der Kippsegmente behindert oder gänzlich behindert werden, jedoch mindestens ein Kippsegment des Kippsegmentlagers mit seinem Stiftelement muss weiterhin radial beweglich bleiben, um ein Kippen des mit diesem Stiftelement verbundenen Kippsegments zu erlauben. Dies gilt für alle Ausführungsformen der Erfindung.

In einer anderen Ausführungsform der Erfindung ist zwischen der Innenseite der Hülse und der Außenseite des Kippsegments ein Federelement vorgesehen, welches durch Einstellen des Spalts des Kippsegments zwischen der Innenseite der Hülse und der Außenseite des Kippsegments beispielsweise vorspannbar ist. Dadurch kann das Kippsegment hinterfedert werden.

Das Federelement ist gemäß einer Ausführungsform der Erfindung an dem Stiftelement des Kippsegments anbringbar, insbesondere befestigbar, beispielsweise durch auffädeln, aufclipsen oder aufrasten usw..

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Querschnittansicht eines Folienlagers ohne shims bzw. ohne Ausgleichsscheiben;
- Fig. 2: eine schematische Querschnittansicht eines Folienlagers mit shims bzw. mit Ausgleichsscheiben;
- Fig. 3: eine schematische Perspektivansicht von Kippsegmenten mit ihren Stiftelementen eines Kippsegmentlagers gemäß einer Ausführungsform der Erfindung;
- Fig. 4: ein Ausschnitt einer Hülse in einer Perspektivansicht eines erfindungsgemäßen Kippsegmentlagers;
- Fig. 5: eine schematische Schnittansicht der Hülse gemäß Fig. 4, wobei ein Kippsegmentlager mit einem Stiftelement, wie in Fig. 3 mit der Hülse verbunden ist;
- Fig. 6: eine schematische Perspektivansicht eines weiteren Ausführungsbeispiels einer Hülse und eines Kippsegments mit einem Stiftelement eines erfindungsgemäßen Kippsegmentlagers; und
- Fig. 7: eine schematische Frontansicht eines weiteren Ausführungsbeispiels einer Hülse und eines Kippsegments mit einem Stiftelement eines erfindungsgemäßen Kippsegmentlagers.

### Ausführungsformen der Erfindung

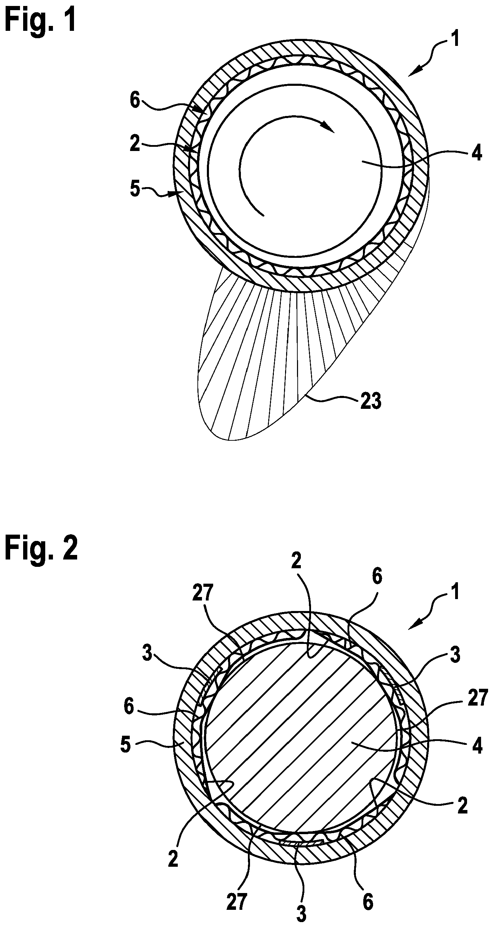

In Fig. 1 ist ein Folienlager 1 ohne sog. shims bzw. Ausgleichsscheiben gezeigt. Die Welle 4 liegt in Umfangsrichtung nur an einem Punkt, d.h. axial entlang einer Linie an der sog. top foil bzw. oberen Folie 2 an. Es entsteht nur ein sich verengender Spalt in Umfangsrichtung, in dem sich der hydro- bzw. aerodynamische Druck aufbauen kann, wie mit dem hydrodynamischen Druckprofil 23 angedeutet ist.

In Fig. 2 ist wiederum ein Folienlager 1 mit sog. shims bzw. Ausgleichsscheiben 3 gezeigt. Durch die sog. shims bzw. Ausgleichsscheiben 3 entstehen in diesem Beispiel an drei am Umfang sich verengende Spalte, die jeweils ein eigenes aerodynamisches Druckprofil erzeugen. Die Welle 4 wird dadurch in radialer Richtung geteilt. In diesem in Fig. 2 gezeigten Beispiel sind die Folien in Umfangsrichtung in drei Abschnitte geteilt. Es ist in Fig. 2 die rotierende Welle 4, der Lagerrücken 5, die sog. shims bzw. Ausgleichsscheiben 3, die sog. top foils bzw. oberen Folien 2 sowie die sog. bump foils bzw. Pufferfolien 6 gezeigt.

Folienlager 1 sind ein spezieller Typ von Gleitlager. Es sich aerodynamische Lager, die für hohe Drehzahlen eingesetzt werden. Folienlager 1 der ersten Generation bestehen aus der sog. top-foil bzw. oberen Folie 2, der sog. bump foil bzw. Pufferfolie 6 und dem Lagerrücken 5. Zur Verbesserung der Stabilität der Wellen 4 in diesen Lagern 1 werden über den Umfang verteilt mehrere, z.B. drei, sogenannten shims bzw. Ausgleichsscheiben 3 zwischen Lagerrücken 5 und die sog. bump foil bzw. Pufferfolie 6 eingelegt. Ohne solche sog. shims bzw. Ausgleichsscheiben 3 erfolgt der aerodynamische Druckaufbau nur an einer Stelle in Wellenumfangsrichtung, bzw. dort wo die Welle 4 durch äußere Kräfte bedingt an der sog. top foil bzw. oberen Folie 2 anliegt, wie in Fig. 1 gezeigt ist. Durch die sog. shims bzw. Ausgleichsscheiben 3 entstehen über den Lagerumfang an mehreren Stellen sich verengende Spalte 27 zwischen der Welle 4 und der sog. top foil bzw. oberen Folie 2 wie in Fig. 2 gezeigt ist.

An jeder dieser Verengungen baut sich jeweils ein aerodynamischer Druck auf, der die Welle 4 trägt und sie in radialer Richtung positioniert. Die Position und die Höhe der sog. shims bzw. Ausgleichsscheiben 3 legen die Geometrie des Aufbaus fest. Nach der Montage der Folien 2, 6 und der sog. shims bzw. Ausgleichsscheiben 3 ist die Geometrie nicht mehr veränderbar. Lage und Stärke der Druckverläufe sind dann nur noch von den Betriebsbedingungen, wie der Gleitgeschwindigkeit, der Viskosität des Mediums und der Temperatur abhängig.

Aufgrund von Fertigungstoleranzen wurden bisher Graphitsegmente als Kippsegmente hinterfedert. So kann es z.B. in Turboladern dazu kommen, dass die Spalte zwischen dem Turbinen- oder Verdichterrad, welche an bzw. auf den Wellen befestigt sind, und dem Gehäuse so groß sind, dass der Wirkungsgrad klein bleibt. Bei zu kleinen Abständen kann es wiederum zum Anstreifen der Räder am Gehäuse kommen mit einem anschließenden Ausfall des Turboladers.

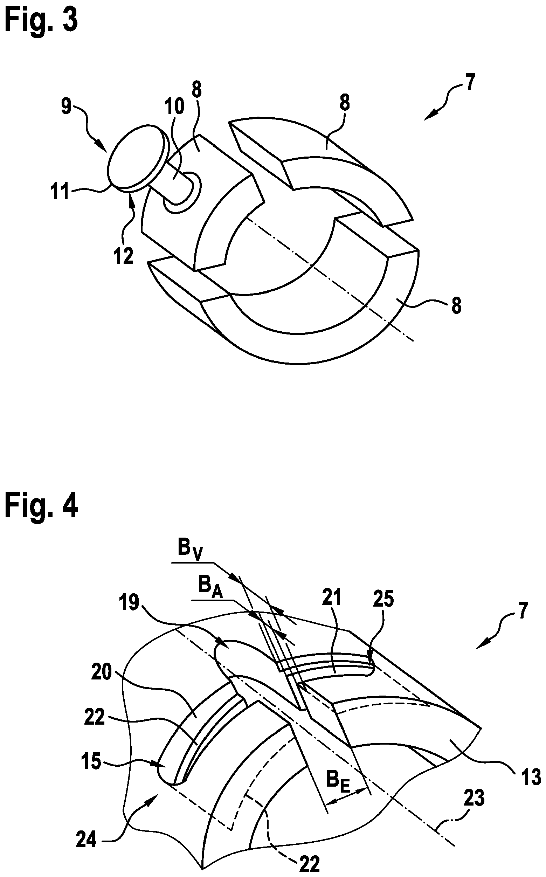

Gemäß dem erfindungsgemäßen Kippsegmentlager kann die Fertigungskomplexität bei dem Kippsegmentlager verringert werden. Des Weiteren kann durch ein alternatives Montagekonzept die Montage vereinfacht werden und des Weiteren die Positionierbarkeit der durch das Kippsegmentlager zu lagernden Welle verbessert werden, wie im Folgenden anhand der Fig. 3 bis 7 erläutert wird.

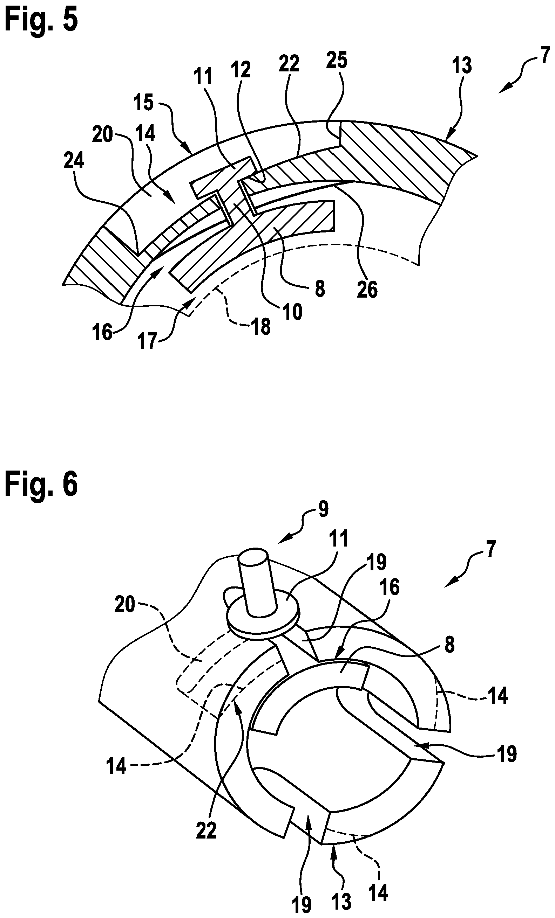

In Fig. 3 ist eine Perspektivansicht mehrerer Kippsegmente 8 eines erfindungsgemäßen Kippsegmentlagers 7 gezeigt zum Einsetzen in einer Stiftelementaufnahme 15 einer Hülse 13 des jeweiligen Kippsegmentlagers 7, wie in den Fig. 4, 5, 6 und 7 gezeigt ist. Die Kippsegmente 8 weisen dabei jeweils ein Stiftelement 9 oder einen Pin auf, wobei in den Fig. 3 und 6 nur eines der Kippsegmente 8 mit einem solchen Stiftelement 9 oder Pin gezeigt ist. Die Stiftelemente oder Pins der beiden anderen Kippsegmente 8 wurden aus Gründen der Übersichtlichkeit nicht dargestellt. Im Folgenden wird der Begriff Stiftelement 9 verwendet, wobei stattdessen ebenso der Begriff Pin verwendet werden kann.

Das Stiftelement 9 oder der Pin des jeweiligen Kippsegments 8 weist einen Schaft 10 mit einer Schaftlänge und einen Kopf 11 auf. Die Unterseite 12 des Kopfs 11 kann beispielsweise gerade oder eben, wie in Fig. 3, 5, 6 und 7 gezeigt ist, gewölbt, insbesondere nach außen gewölbt oder konvex oder nach innen gewölbt oder konkav, halbkugelförmig usw. ausgebildet sein oder jede andere Form aufweisen, welche geeignet ist, dass nach dem Einführen des Stiftelements 9 in eine Hülse 13, beispielsweise eine hülsenförmige Kartusche, des erfindungsgemäßen Kippsegmentlagers 7, ein Kontakt zwischen einem Steigungsbereich 14 einer Stiftelementaufnahme 15 der Hülse 13 und der Unterseite 12 des Kopfs 11 des Stiftelements 9 gewährleistet ist, wie mit Bezug auf die Fig. 4, 5, 6 und 7 noch detaillierter erläutert wird. Durch einen derartigen Kontakt zwischen dem Steigungsbereich 14 der Stiftelementaufnahme 15 der Hülse 13 und der Unterseite 12 des Kopfes 11 des Stiftelements 9 wird eine Verstellung des Kippsegments 8 möglich, insbesondere zur Einstellung einer Spalthöhe eines Spalts 16 zwischen der Innenseite der Hülse 13 und der Außenseite des Kippsegments 8 und/oder einer Spalthöhe eines Spalts 17, wie in Fig. 5 angedeutet ist, zwischen der Innenseite des Kippsegments 8 und einer Außenseite einer durch das erfindungsgemäße Kippsegmentlager zu lagernden Welle 18.

In den Fig. 4 und 5 ist jeweils ein Ausschnitt einer Hülse 13 des erfindungsgemäßen Kippsegmentlagers 7 in einer Perspektivansicht gezeigt. Die Hülse 13 ist dabei an einem ihrer Enden mit einer Einführungsaussparung 19, beispielsweise einer Nut, ausgebildet. Die Einführungsaussparung 19 verläuft in dem in den Fig. 4 und 5 gezeigten Ausführungsbeispiel z.B. in Längsrichtung der Hülse 13, wobei die Einführungsaussparung 19 auch schräg zu der Längsrichtung der Hülse 13 verlaufen kann. Entscheiden ist, dass die Einführungsaussparung 19 mit der in Umfangsrichtung der Hülse 13 verlaufenden zuvor genannten Stiftelementaufnahme 15 verbunden ist, um das Stiftelement 9 von der Einführungsaussparung 19 in die Stiftelementaufnahme 15 zu bewegen. Die in Umfangsrichtung der Hülse 13 verlaufende Stiftelementaufnahme 15 ist mit der Einführungsaussparung 19 derart verbunden, dass das in die Einführungsaussparung 19 eingeführte Stiftelement 9 eines Kippsegments 8 von der Einführungsaussparung 19 in die Stiftelementaufnahme 15 bewegt und dort positioniert werden kann. Vorzugsweise ist das Stiftelement 9 und damit das Kippsegment 8 in der gewünschten Position in der Stiftelementaufnahme 15 blockierbar und/oder fixierbar.

Die Breite B_{E} der Einführungsaussparung 19 ist dabei derart dimensioniert, dass das Stiftelement 9 mit seinem Schaft 10 in die Einführungsaussparung 19 einführbar und entlang der Länge der Einführungsaussparung 19 beweglich ist, beispielsweise ohne dass das Stiftelement 9 dabei jedoch mit seinem Kopf 11 ungewollt aus der Einführungsaussparung 19 herausfallen kann. Das Stiftelement 9 des Kippsegments 8 wird hierbei entlang der Einführungsaussparung 19 bewegt bis zu der Stiftelementaufnahme 15 und in die Stiftelementaufnahme 15 bewegt und dort positioniert und vorzugsweise zusätzlich fixiert und/oder blockiert.

Die Stiftelementaufnahme 15 ist dabei beispielsweise als eine Vertiefung 20 mit einer Aussparung 21 in Umfangsrichtung der Hülse 13 verlaufend ausgebildet. Die Breite B_{A} der Aussparung 21 ist dabei derart dimensioniert, dass das Stiftelement 9 mit seinem Schaft 10 entlang der Länge der Aussparung 21 der Stiftelementaufnahme 15 beweglich ist, ohne dass das Stiftelement 9 dabei jedoch mit seinem Kopf 11 ungewollt aus der Aussparung 21 der Stiftelementaufnahme 15 herausfallen kann. Die Breite Bv der Vertiefung 20 der Stiftelementaufnahme 15 ist derart dimensioniert, dass das Stiftelement 9 mit seinem Kopf 11 in der Vertiefung 20 aufnehmbar und entlang der Vertiefung 20 beweglich ist. Der Boden 22 der Vertiefung 20 der Stiftelementaufnahme 15 ist derart ausgebildet, dass der Boden 22 eine Steigung aufweist, wie in den Fig. 4 und 5 gezeigt ist. Das bedeutet, dass der Boden 22 der Vertiefung 20 in Umfangsrichtung nicht einen konstanten radialen Abstand zu der Längsachse 23 der Hülse 13 aufweist, sondern der radiale Abstand des Bodens 22, in dem in Fig. 4 und 5 gezeigten Ausführungsbeispiel, z.B. von einem Ende 24 der Vertiefung 20 in Umfangsrichtung zu dem anderen Ende 25 der Vertiefung 20 zunimmt. Dem entsprechend nimmt die Höhe der Vertiefung 20 in Umfangsrichtung von dem einen Ende 24 der Vertiefung 20 zu dem anderen Ende 25 der Vertiefung 20 ab, wie in Fig. 4 und 5 gezeigt ist. Die Erfindung ist jedoch auf diesen Verlauf der Steigung des Bodens 22 der Vertiefung 20 oder den Steigungsbereich 14 der Stiftelementaufnahme 15, welche von einem Ende 24 der Vertiefung 20 zu dem anderen Ende 25 der Vertiefung 20 beispielsweise in Umfangsrichtung zunimmt, beispielsweise kontinuierlich zunimmt, nicht beschränkt. Die Steigung des Bodens 22 der Vertiefung 20 oder der Steigungsbereich 14 der Stiftelementaufnahme 15 kann jeden Verlauf aufweisen, welcher geeignet ist einerseits einen Kontakt zwischen der Unterseite 12 des Kopfs 11 des Stiftelements 9 und dem Boden 22 der Vertiefung 20 bereitzustellen und andererseits ein geeignetes Einstellen der Spalthöhe des Spalts 16 zwischen der Innenseite der Hülse 13 und der Außenseite des Kippsegments 8 einzustellen. Auf diese Weise kann wenn, wie in Fig. 5 gezeigt ist, ein Federelement 26 zwischen der Innenseite der Hülse 13 und der Außenseite des Kippsegments 8 angeordnet ist, die Federvorspannung des Federelements 26 sehr fein justiert werden. Damit kann auch die Position der durch das erfindungsgemäße Kippsegmentlager 7 zu lagernden Welle 18, welche in Fig. 5 mit einer gestrichelten Linie angedeutet ist, zur Hülse 13 und einem nicht dargestellten Gesamtgehäuse des Kippsegmentlagers 7 sehr genau eingestellt werden. Das Federelement 26 ist derart ausgebildet, dass es an dem Schaft 10 des Stiftelements 9 angeordnet und vorzugsweise von dem Stiftelement 9 nicht ungewollt herunterrutschen kann. Beispielsweise kann das Federelement 26 derart ausgebildet sein, dass es eine Öffnung aufweist mit der es auf das Stiftelement 9 aufgeschoben und aufgerastet werden kann.

Das Stiftelement 9 wird in der Stiftelementaufnahme 15 in einer Position, in welcher die Federvorspannung geeignet eingestellt ist, zumindest blockiert und/oder fixiert. Beispielsweise kann das Stiftelement 9 in der Vertiefung 20 dazu blockiert und fixiert werden durch Kleben, Schweißen, Löten, Verschrauben, Verstiften, Verklemmen und/oder wenigstens einen rechts und/oder linkes des Kopfs 11 des Stiftelements 9 in der Vertiefung 20 eingebrachten Keil usw. Das Stiftelement 9 muss in der Umfangsrichtung leicht beweglich bleiben, so dass ein Kippen des Kippsegmentes 8 beispielsweise im zweistelligen µm Bereich weiterhin möglich bleibt. Somit dürfen die Kippsegmente 8 des Kippsegmentlagers 7, wie z.B. bei einem Keil, blockiert aber nicht in der Bewegung behindert werden. Die radiale Bewegung darf dabei an zwei Kippsegmenten 8 in dem gezeigten Ausführungsbeispiel behindert werden, jedoch mindestens ein Kippsegment 8 des Kippsegmentlagers 7 muss weiterhin radial beweglich bleiben. Dies gilt für alle Ausführungsformen der Erfindung.

Wie in Fig. 4 mit einer gestrichelten Linie angedeutet ist, kann der Boden 20 mit seiner Steigung und die dabei durch den Boden 20 gebildete Steigungsfläche auch vor bis zu wenigstens einem vorderen Ende, wie in Fig. 4 angedeutet, und/oder einem hinteren Ende der Hülse 13 verlaufen oder ausgeklinkt sein. In diesem Fall wäre die Darstellung der Hülse in Fig. 5 keine Schnittansicht mit einer Schraffur, sondern eine Ansicht auf das vordere Ende der Hülse 13, bei welcher der Boden bis zum vorderen Ende der Hülse 13 ausgespart ist. Auf diese Weise kann man somit auch direkt von der Seite, d.h. dem jeweils ausgesparten oder ausgeklinkten Hülsenende, sehen, wo sich das Stiftelement 9 und damit das Kippsegment 8 befindet. Dies hat den Vorteil, dass man eine Arretierung und Einstellung von diesem Hülsenende aus ermöglichen kann und kein Ausbau der Hülse 13 des Kippsegmentlagers 7 aus dem Gesamtgehäuse mehr nötig ist.

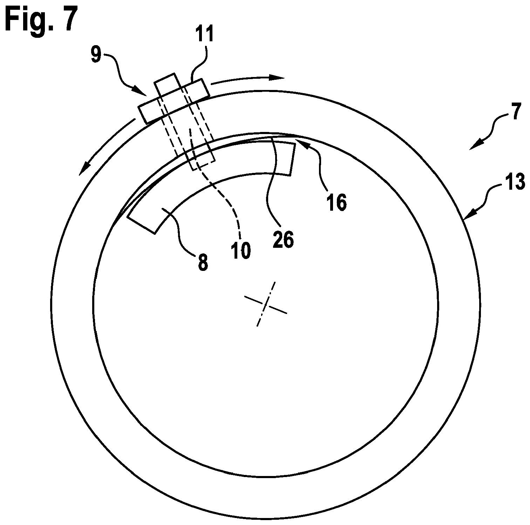

Die Stiftelementaufnahme 15 erstreckt sich in dem in Fig. 4 und 5 gezeigten Ausführungsbeispiel in Umfangsrichtung der Hülse 13 zu beiden Seiten der Einführungsaussparung 19. Ebenso kann sich die Stiftelementaufnahme 15 sich auch nur zu einer Seite der Einführungsaussparung 19 in Umfangsrichtung der Hülse 13 erstrecken, wie in Fig. 6 und 7 mit einer gestrichelten Linie angedeutet ist. Dabei ist mit einer gepunkteten Linie in Fig. 6 jeweils stark vereinfacht der Verlauf der Steigung des Bodens 22 der Vertiefung 20 der jeweiligen Stiftelementaufnahme 15 angedeutet, entlang der das Stiftelement 9 in der Aussparung entlang dem Boden 22 der Vertiefung 20 bewegt werden kann, um beispielsweise den Spalt 16 zwischen der Innenseite der Hülse 13 und der Außenseite des Kippsegments 8 einzustellen. In Fig. 6 ist dabei aus Gründen der Übersichtlichkeit lediglich ein Kippsegment 8 gezeigt. Die Darstellung in den Fig. 1 bis 6 und nachfolgender Fig. 7 ist dabei stark vereinfacht, nicht maßstäblich und rein schematisch.

Das Stiftelement 9 und das Kippsegment 8 können einteilig ausgebildet sein, wie in Fig. 3 und 5 gezeigt ist, beispielweise als Kunststoff-, und/oder Metallgussteil, oder aus einem Materialblock, z.B. einem Metall- und/oder Kunststoffblock, beispielsweise herausgearbeitet sein, z.B. mittels Fräsen, Drehen oder einem anderen geeigneten Verfahren oder geeigneten Verfahrenskombination. Neben Metall, darunter einer Metalllegierung, sowie Kunststoff kann das Kippsegment auch aus einem geeigneten Graphitmaterial hergestellt sein oder dieses aufweisen.

Das Stiftelement 9 kann ebenso als separates Teil an dem Kippsegment 8 befestigt sein, beispielsweise mit diesem form- und/oder kraftschlüssig verbunden sein. Beispielsweise kann das Stiftelement 9 mit dem Kippsegment 8 verschraubt, verklebt, verschweißt, verlötet, verstemmt und/oder verpresst usw. sein. Ebenso können der Kopf 11 und der Schaft 10 des Stiftelements 9 dabei einteilig oder als zwei separate Teile ausgebildet sein die lösbar oder unlösbar miteinander verbunden sind.

In den zuvor in den Fig. 3 bis 6 beschriebenen Ausführungsformen kann die Einführungsaussparung 19 nach dem Positionieren des Kippsegments 8 in der Stiftelementaufnahme 15 verschlossen werden, beispielsweise durch ein nicht gezeigtes Deckelelement zum Verschließen des Hülsenendes oder durch Einsetzen eines Klemmkeils oder dergleichen in die Einführungsaussparung 19 usw. derart, dass die Einführungsaussparung 19 für das Kippsegment 8 und sein Stiftelement 9 versperrt ist und das Stiftelement 9 mit dem Kopf 11 nicht ungewollt aus der Einführungsaussparung 19 herausfallen kann.

In Fig. 7 ist eine stark vereinfachte Schnittansicht eines weiteren Ausführungsbeispiels des erfindungsgemäßen Kippsegmentlagers 7 gezeigt.

Dabei ist aus Gründen der Übersichtlichkeit statt der drei Kippsegmente lediglich ein Kippsegment 8 davon in Fig. 7 dargestellt, wobei ein zusätzliches Federelement 26 zwischen der Innenseite der Hülse 13 und der Außenseite des Kippsegments 8 vorgesehen und an dem Schaft 10 des Stiftelements 9 angeordnet ist.

Der Schaft 10 des Stiftelements 9 ist dabei einteilig oder als separates Teil mit dem Kippsegment 8 verbunden. Als separates Teil ist das Stiftelement 9 mit dem Kippsegment 8 form- und/oder kraftschlüssig verbunden. Beispielsweise ist das Stiftelement 9 mit dem Kippsegment 8 verschraubt, verklebt, verschweißt, verlötet, verstemmt und/oder verpresst usw.. Dies gilt für alle Ausführungsformen der Erfindung.

Des Weiteren ist der Kopf 11 als Mutter ausgebildet, welche mit dem Schaft 10 des Stiftelements 9 verschraubbar ist. Der Schaft 10 des Stiftelements 9 weist in dem Ausführungsbeispiel in Fig. 7 ein Außengewinde und die Mutter als Kopf 11 ein dazu korrespondierendes Innengewinde auf. Auf diese Weise kann durch die Mutter als Kopf 11 z.B. der Spalt 16 zwischen der Innenseite der Hülse 13 und der Außenseite des Kippsegments 8 eingestellt werden und damit beispielsweise eine Vorspannung einer an dem Kippsegment 8 angebrachten und zwischen der Innenseite der Hülse 13 und der Außenseite des Kippsegments 8 angeordneten Federelement 26 eingestellt werden. Die Stiftelementaufnahme 15 der Hülse 13 ist dabei beispielsweise als Aussparung, z.B. Nut, in Umfangsrichtung der Hülse ausgebildet, und das Stiftelement 9 mit seinem Schaft entlang der Länge der Aussparung in Umfangsrichtung beweglich. Die Aussparung braucht dabei nicht wie zuvor der Boden der Vertiefung der Stiftelementaufnahme in den Fig. 4, 5 und 6 mit einer zusätzlichen Steigung oder Steigungsbereich versehen sein. Stattdessen kann beispielsweise der Spalt 16 zwischen der Innenseite der Hülse 13 und der Außenseite des Kippsegments 8 durch Drehen der Mutter als Kopf 11 entlang des Außengewindes des Schafts 10 eingestellt werden. Das Stiftelement 9 kann dabei ebenfalls zusätzlich blockiert und/oder fixiert werden, wie zuvor mit Bezug auf die Fig. 3 bis 6 beschrieben wurde. Das Stiftelement 9 muss, wie zuvor beschrieben wurde, in der Umfangsrichtung beweglich bleiben, zumindest leicht beweglich bleiben, so dass ein Kippen des mit dem Stiftelemente 9 verbundenen Kippsegments 8 beispielsweise im zweistelligen µm Bereich weiterhin möglich bleibt. Wenigstens ein, mehrere oder auch alle Kippsegmente 8 des Kippsegmentlagers 7 dürfen daher, wie z.B. bei einem Keil usw., blockiert aber nicht gänzlich in der Bewegung behindert werden. Die radiale Bewegung kann bzw. darf dabei an maximal zwei der dargestellten drei Kippsegmente 8 behindert werden, jedoch mindestens ein Kippsegment 8 des Kippsegmentlagers 7 muss weiterhin radial beweglich bleiben, um ein Kippen des Kippsegments 8 zu erlauben. Dies gilt für alle Ausführungsformen der Erfindung. Des Weiteren ist bei dieser Ausführungsform keine zusätzliche Einführungsaussparung zum Einführen des Stiftelements 9 notwendig wie zuvor in den Fig. 3 bis 6.

Obwohl die vorliegende Erfindung anhand bevorzugter Ausführungsbeispiele vorstehend vollständig beschrieben wurde, ist sie darauf nicht beschränkt, sondern auf vielfältige Art und Weise modifizierbar. Die in den Fig. 3, 4, 5, 6 und 7 gezeigten Ausführungsbeispiele sind miteinander kombinierbar, insbesondere einzelne Merkmale davon. Mittels des erfindungsgemäßen und zuvor insbesondere mit Bezug auf die Fig. 3, 4, 5, 6 und 7 beschriebenen Kippsegmentlagers kann durch die Aussparung 21 der Stiftelementaufnahme 15, z.B. eine Nut oder ein Langloch, sowie optional zusätzlich einer Umfangssteigung der Hülse 13 bzw. einem Steigungsbereich 14 des Bodens 22 der Vertiefung 20 der Stiftelementaufnahme 15 der Hülse 13 ein jeweiliges Kippsegment 8 und insbesondere ein Spalt 16, 17 des Kippsegments 8 sehr einfach eingestellt und justiert werden, insbesondere bei einem Luftlager mit Kippsegmenten als einem Beispiel für ein erfindungsgemäßes Kippsegmentlager. Des Weiteren erlaubt das erfindungsgemäße Kippsegmentlager eine vereinfachte Montage der Kippsegmente an der Hülse.

## Patentansprüche

1. Kippsegmentlager (7) aufweisend:
ein Kippsegment (8), welches ein Stiftelement (9) aufweist,
eine Hülse (13), wobei die Hülse (13) wenigstens eine Stiftelementaufnahme (15) mit einer Aussparung (21) in Umfangsrichtung aufweist,
wobei das Stiftelement (9) in der Aussparung (21) aufnehmbar ist, **dadurch gekennzeichnet, dass** das Stiftelement (9) entlang der Aussparung (21) in Umfangsrichtung bewegbar ist zum Einstellen wenigstens eines Spalts (16, 17) des Kippsegments (7).

2. Kippsegmentlager nach Anspruch 1, wobei der wenigstens eine Spalt des Kippsegments ein Spalt (16) zwischen der Außenseite des in der Hülse (13) aufgenommenen Kippsegments (8) und der Innenseite der Hülse (13) oder ein Spalt (17) zwischen der Innenseite des in der Hülse (13) aufgenommenen Kippsegments (8) und einer in dem Kippsegmentlager (7) gelagerten Welle (18) ist.

3. Kippsegmentlager nach Anspruch 1 oder 2, wobei das Stiftelement (9) einen Schaft (10) und einen Kopf (11) aufweist, wobei der Schaft (10) und der Kopf (11) fest oder lösbar miteinander verbunden sind und/oder wobei der Schaft (10) und das Kippsegment (8) fest oder lösbar miteinander verbunden sind.

4. Kippsegmentlager nach Anspruch 3, wobei der Kopf (11) als Mutter mit einem Innengewinde und der Schaft (10) mit einem zu dem Innengewinde der Mutter korrespondierenden Außengewinde ausgebildet ist.

5. Kippsegmentlager nach einem Anspruch 4, wobei der wenigstens eine Spalt (16, 17) des Kippsegments (8) durch Schrauben der Mutter entlang des Schafts (10) einstellbar ist.

6. Kippsegmentlager nach einem der Ansprüche 1 bis 5, wobei die Stiftelementaufnahme (15) eine Vertiefung (20) mit einem Boden (22) aufweist, wobei das Stiftelement (9) in der Aussparung (21) entlang des Bodens (20) in Umfangsrichtung bewegbar ist.

7. Kippsegmentlager nach Anspruch 6, wobei der Boden (22) mit einer Steigung ausgebildet ist zum Positionieren des Stiftelements (9) und des mit dem Stiftelement (9) verbundenen Kippsegments (8) in einer vorbestimmten Position zum Einstellen des wenigstens einen Spalts (16, 17) des Kippsegments (8) .

8. Kippsegmentlager nach Anspruch 6 oder 7, wobei die Unterseite (12) des Kopfs (11) des Stiftelements (9) derart ausgebildet ist, dass stets die Unterseite (12) des Kopfes (11) mit dem Boden (22) und insbesondere einem Steigungsbereich (14) des Bodens (22) in Kontakt ist, wenn das Stiftelement (9) mit seinem Kopf (11) entlang des Bodens (22) in der Aussparung (21) in eine vorbestimmten Position bewegt wird zum Einstellen des wenigstens einen Spalts (16, 17) des Kippsegments (8), wobei die Unterseite (12) des Kopfes (11) insbesondere gerade und/oder gewölbt, ausgebildet ist.

9. Kippsegmentlager nach einem der vorstehenden Ansprüche, wobei das Stiftelement (9) mit dem Kippsegment (8) einstückig oder einteilig ausgebildet ist.

10. Kippsegmentlager nach einem der vorstehenden Ansprüche, wobei die Hülse (13) eine Einführungsaussparung (19) aufweist, welche derart ausgebildet ist, dass das Stiftelement (9) entlang der Einführungsaussparung (19) beweglich ist, wobei die Einführungsaussparung (19) sich von einem Ende der Hülse (13) zu der Stiftelementaufnahme (15) erstreckt und mit dieser derart verbunden ist, dass das Stiftelement (9) von der Einführungsaussparung (19) in die Stiftelementaufnahme (15) bewegbar ist, wobei sich die Stiftelementaufnahme (15) insbesondere zu einer oder beiden Seiten der Einführungsaussparung (19) in Umfangsrichtung der Hülse (13) erstreckt.

11. Kippsegmentlager nach einem der Ansprüche 6 bis 10, wobei der Boden (22) der Vertiefung (20) der Stiftelementaufnahme (15) sich zu einem oder beiden Enden der Hülse (13) erstreckt.

12. Kippsegmentlager nach einem der vorstehenden Ansprüche, wobei das Stiftelement (9) in der Stiftelementaufnahme (15) in einer vorbestimmten Position, in welcher der wenigstens eine Spalt (16, 17) des Kippsegments (8) eingestellt ist zumindest blockierbar und/oder fixierbar ist.

13. Kippsegmentlager nach einem der vorstehenden Ansprüche, wobei wenigstens eines der Stiftelemente (9) eines der Kippsegmente (8) des Kippsegmentlagers lediglich derart blockiert ist, dass es weiterhin in Umfangsrichtung beweglich ist und ein Kippen des mit ihm verbundenen Kippsegments (8) erlaubt.

14. Kippsegmentlager nach einem der vorstehenden Ansprüche, wobei zwischen der Innenseite der Hülse (13) und der Außenseite des Kippsegments (8) ein Federelement (26) vorgesehen ist, welches durch Einstellen des Spalts (16, 17) des Kippsegments (8) zwischen der Innenseite der Hülse (13) und der Außenseite des Kippsegments (8) vorspannbar ist.

15. Kippsegmentlager nach Anspruch 14, wobei das Federelement (26) an dem Stiftelement (9) des Kippsegments (8) angeordnet, insbesondere befestigt ist.

## Claims

1. Tilt segment bearing (7) comprising:
a tilting segment (8), which has a pin element (9),
a sleeve (13), the sleeve (13) having at least one pin element receptacle (15) with a cut-out (21) in the circumferential direction,
where the pin element (9) can be received in the cut-out (21),
**characterized in that** the pin element (9) can be moved in the circumferential direction along the cut-out (21) in order to adjust at least one gap (16, 17) of the tilting segment (7).

2. Tilt segment bearing according to Claim 1, wherein the at least one gap of the tilting segment is a gap (16) between the outer side of the tilting segment (8) received in the sleeve (13) and the inner side of the sleeve (13), or a gap (17) between the inner side of the tilting segment (8) received in the sleeve (13) and a shaft (18) mounted in the tilt segment bearing (7).

3. Tilt segment bearing according to Claim 1 or 2, when the pin element (9) has a shaft (10) and a head (11), wherein the shaft (10) and the head (11) are fixedly or detachably connected to each other and/or wherein the shaft (10) and the tilting segment (8) are fixedly or detachably connected to each other.

4. Tilt segment bearing according to Claim 3, when the head (11) is formed as a nut having an internal thread and the shaft (10) is formed with an external thread corresponding to the internal thread of the nut.

5. Tilt segment bearing according to one Claim 4, wherein the at least one gap (16, 17) of the tilting segment (8) can be adjusted by screwing the nut along the shaft (10).

6. Tilt segment bearing according to one of Claims 1 to 5, wherein the pin element receptacle (15) has a depression (20) with a base (22), wherein the pin element (9) can be moved in the circumferential direction along the base (20) in the cut-out (21).

7. Tilt segment bearing according to Claim 6, wherein the base (22) is formed with a slope in order to position the pin element (9) and the tilting segment (8) connected to the pin element (9) in a predetermined position for adjusting the at least one gap (16, 17) of the tilting segment (8).

8. Tilt segment bearing according to Claim 6 or 7, wherein the underside (12) of the head (11) of the pin element (9) is formed in such a way that the underside (12) of the head (11) is always in contact with the base (22) and in particular with a sloping region (14) of the base (22) when the pin element (9) is moved with its head (11) along the base (22) in the cut-out (21) into a predetermined position in order to adjust the at least one gap (16, 17) of the tilting segment (8), wherein the underside (12) of the head (11) is in particular formed so as to be straight and/or curved.

9. Tilt segment bearing according to one of the preceding claims, wherein the pin element (9) is formed in one piece or one part with the tilting segment (8).

10. Tilt segment bearing according to one of the preceding claims, wherein the sleeve (13) has an insertion cut-out (19) which is formed in such a way that the pin element (9) can be moved along the insertion cut-out (19), wherein the insertion cut-out (19) extends from one end of the sleeve (13) to the pin element receptacle (15) and is connected to the latter in such a way that the pin element (9) can be moved from the insertion cut-out (19) into the pin element receptacle (15), wherein the pin element receptacle (15) extends in particular in the circumferential direction of the sleeve (13) to one or both sides of the insertion cut-out (19).

11. Tilt segment bearing according to one of Claims 6 to 10, wherein the base (22) of the depression (20) of the pin element receptacle (15) extends to one or both ends of the sleeve (13).

12. Tilt segment bearing according to one of the preceding claims, wherein the pin element (9) can at least be blocked and/or fixed in the pin element receptacle (15) in a predetermined position, in which the at least one gap (16, 17) of the tilting segment (8) is adjusted.

13. Tilt segment bearing according to one of the preceding claims, wherein at least one of the pin elements (9) of one of the tilting segments (8) of the tilt segment bearing is merely blocked in such a way that it can continue to be moved in the circumferential direction and permits tilting of the tilting segment (8) connected thereto.

14. Tilt segment bearing according to one of the preceding claims, wherein, between the inner side of the sleeve (13) and the outer side of the tilting segment (8), a spring element (26) is provided, which can be preloaded between the inner side of the sleeve (13) and the outer side of the tilting segment (8) by adjustment of the gap (16, 17) of the tilting segment (8).

15. Tilt segment bearing according to Claim 14, wherein the spring element (26) is arranged, in particular fixed, on the pin element (9) of the tilting segment (8).

## Revendications

1. Palier à patins oscillants (7) présentant:
un patin oscillant (8), qui présente un élément de broche (9),
une douille (13), dans lequel la douille (13) présente au moins un logement d'élément de broche (15) avec une découpe (21) en direction périphérique,
dans lequel l'élément de broche (9) peut être logé dans la découpe (21),
**caractérisé en ce que** l'élément de broche (9) est déplaçable le long de la découpe (21) dans la direction périphérique pour le réglage d'au moins une fente (16, 17) du patin oscillant (7).

2. Palier à patins oscillants selon la revendication 1, dans lequel ladite au moins une fente du patin oscillant est une fente (16) entre le côté extérieur du patin oscillant (8) logé dans la douille (13) et le côté intérieur de la douille (13) ou une fente (17) entre le côté intérieur du patin oscillant (8) logé dans la douille (13) et un arbre (18) supporté dans le palier à patins oscillants (7).

3. Palier à patins oscillants selon une revendication 1 ou 2, dans lequel l'élément de broche (9) présente une tige (10) et une tête (11), dans lequel la tige (10) et la tête (11) sont assemblées l'une à l'autre de façon fixe ou séparable et/ou dans lequel la tige (10) et le patin oscillant (8) sont assemblés l'un à l'autre de façon fixe ou séparable.

4. Palier à patins oscillants selon la revendication 3, dans lequel la tête (11) est réalisée sous forme d'écrou avec un filet intérieur et la tige (10) est réalisée avec un filet extérieur correspondant au filet intérieur de l'écrou.

5. Palier à patins oscillants selon l'une revendication 4, dans lequel ladite au moins une fente (16, 17) du patin oscillant (8) peut être réglée en vissant l'écrou le long de la tige (10).

6. Palier à patins oscillants selon l'une quelconque des revendications 1 à 5, dans lequel le logement d'élément de broche (15) présente un creux (20) avec un fond (22), dans lequel l'élément de broche (9) est déplaçable dans la découpe (21) le long du fond (20) en direction périphérique.

7. Palier à patins oscillants selon la revendication 6, dans lequel le fond (22) est réalisé avec une pente pour le positionnement de l'élément de broche (9) et du patin oscillant (8) relié à l'élément de broche (9) dans une position prédéterminée pour le réglage de ladite au moins une fente (16, 17) du patin oscillant (8).

8. Palier à patins oscillants selon une revendication 6 ou 7, dans lequel le côté inférieur (12) de la tête (11) de l'élément de broche (9) est réalisé de telle manière que le côté inférieur (12) de la tête (11) soit toujours en contact avec le fond (22) et en particulier avec une région inclinée (14) du fond (22), lorsque l'on déplace l'élément de broche (9) avec sa tête (11) le long du fond (22) dans la découpe (21) dans une position prédéterminée pour le réglage de ladite au moins une fente (16, 17) du patin oscillant (8), dans lequel le côté inférieur (12) de la tête (11) est réalisé en particulier sous forme droite et/ou courbe.

9. Palier à patins oscillants selon l'une quelconque des revendications précédentes, dans lequel l'élément de broche (9) est réalisé d'une seule pièce ou en une seule pièce avec le patin oscillant (8).

10. Palier à patins oscillants selon l'une quelconque des revendications précédentes, dans lequel la douille (13) présente une découpe d'introduction (19), qui est réalisée de telle manière que l'élément de broche (9) soit mobile le long de la découpe d'introduction (19), dans lequel la découpe d'introduction (19) s'étend d'une extrémité de la douille (13) jusqu'au logement d'élément de broche (15) et est reliée à ce dernier de telle manière que l'élément de broche (9) soit déplaçable de la découpe d'introduction (19) au logement d'élément de broche (15), dans lequel le logement d'élément de broche (15) s'étend en particulier jusqu'à un côté ou jusqu'aux deux côtés de la découpe d'introduction (19) dans la direction périphérique de la douille (13).

11. Palier à patins oscillants selon l'une quelconque des revendications 6 à 10, dans lequel le fond (22) du creux (20) du logement d'élément de douille (15) s'étend jusqu'à une extrémité ou jusqu'aux deux extrémités de la douille (13).

12. Palier à patins oscillants selon l'une quelconque des revendications précédentes, dans lequel l'élément de broche (9) peut être au moins bloqué et/ou fixé dans le logement d'élément de broche (15) dans une position prédéterminée, dans laquelle ladite au moins une fente (16, 17) du patin oscillant (8) est réglée.

13. Palier à patins oscillants selon l'une quelconque des revendications précédentes, dans lequel au moins un des éléments de broche (9) d'un des patins oscillants (8) du palier à patins oscillants est bloqué uniquement de façon à être en outre mobile en direction périphérique et à permettre une oscillation du patin oscillant (8) auquel il est assemblé.

14. Palier à patins oscillants selon l'une quelconque des revendications précédentes, dans lequel il est prévu entre le côté intérieur de la douille (13) et le côté extérieur du patin oscillant (8) un élément de ressort (26), qui peut être précontraint en réglant la fente (16, 17) du patin oscillant (8) entre le côté intérieur de la douille (13) et le côté extérieur du patin oscillant (8).

15. Palier à patins oscillants selon la revendication 14, dans lequel l'élément de ressort (26) est disposé, en particulier fixé, sur l'élément de broche (9) du patin oscillant (8).
